# EUROPEAN PATENT APPLICATION

(11) **EP 3 753 668 A1**
(43) Date of publication of application: **23.12.2020**
(21) Application number: 19181475.5
(22) Date of filing: 20.06.2019
(51) Int. Cl.: B23K 28/02, B23K 5/02, B23K 26/24, F16K 5/00, F16K 27/10

(54) **A METHOD FOR MAKING A BALL VALVE FOR REGULATING A FLUID, A BALL VALVE AND A WELDING TOOL FOR HOLDING AND HANDLING VALVE PARTS**

(71) Applicant: BROEN POLAND sp.z.o.o., 58-200 Dzierzoniow (PL)
(72) Inventor: Lildholdt, Mads Lindegaard, 5683 Haarby (DK); Madsen, Peder, 5250 Odense SV (DK); Hansen, Morten Ulrik, 5750 Ringe (DK)
(74) Representative: Olesen, Birthe Bjerregaard

(57) **Abstract**

A method for producing a valve (1) for regulating a fluid is disclosed. The valve comprises a valve housing (2) with a central part (3) and with connection ends (4). A ball (5) inside the central part (3) is arranged relative to one or more valve seats (7). The method of producing the valve housing (2) at least includes arranging the at least a first and a second housing parts (2a, 2b) in rotary manner and with the central part (3a) ends towards each other and arranging the ball (5) in a fixed position inside the inner space (3b) of the central part (3). Then, welding the first and a second housing parts (2a, 2b) from outer side of the central part (3) is done while rotating the first and a second housing parts (2a, 2b) and while holding the ball (5) in a fixed, non-rotating position inside the central part (3). During the welding step, a protective gas is supplied to the inner space (3b) of the central part (3). The result is a valve housing with a single welding seam arranged at the central part (3) of the valve housing (2). A valve and a welding tool for holding the valve parts during the welding step is also disclosed.

## Description

### Field of the Invention

The present invention relates to a ball valve for regulating a fluid, the valve including a valve housing with a central part and with two connection ends, the connection ends extending away from the central part, wherein internally of the central part there is arranged a ball with at least one through-going aperture, wherein the ball is arranged relative to one or more valve seats in the central part of the valve housing.

The present invention also relates to a method for producing the valve.

Finally, the present invention also relates to a welding tool for holding and handling valve housing parts and a ball during welding of the valve housing.

### Background of the Invention

It is commonly known to make valves, e.g. ball valves, and thereby valve housings of several parts and then assemble these parts around a valve seat and a ball. Such valve housings have traditionally been made of brass or other cupper-based alloy.

Lately, there has been introduced methods for making valve housings in steel, e.g. carbon steel or stainless steel which is cheaper and which can be worked with modern production equipment directly from a plate piece or a tube piece faster and cheaper than possible when casting and machining workpieces of brass.

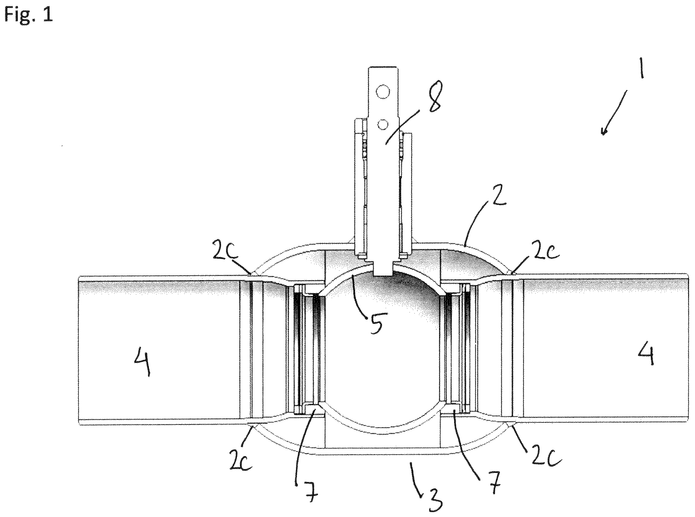

The valve housing is typically assembled of several parts, e.g. by processing of the connection ends and the central part of the housing separately and then assembling the valve housing after installing the ball and valve seats inside the central part of the housing (see fig. 1). The housing may be assembled by corresponding screw threads in respective parts, or alternatively by means of bolted flanges, by welding parts together or by combinations thereof.

When speaking of a ball valve, the ball is, as indicated by the name, usually spherical and with an outer size which is greater than the connecting openings in the valve housing. Ball valves can also have non-spherical balls.

Such a valve therefore has a valve housing with an internal geometry in which valve seat and ball are disposed. The valve housing is typically joined in the vicinity of the ball as the latter requires the largest internal dimension. Such valves are typically made of cast workpieces or the workpieces are shaped from a tubular item or a rod item. The workpieces are formed and shaped by machining into the desired geometry. This shaping process is, however, rather cost-intensive for several reasons. The individual workpieces are to be cast and then handled and machined one by one in a suitable metal cutting unit. Since the workpieces are individually machined, the process is time-consuming, irrespective of the application of modern and rapid processes.

In addition to the handling and machining of the cast workpieces prior to assembling around a valve seat and a ball, the cost of the material also plays a significant role. Brass or other alloys are most often expensive and imply an appreciably greater cost than e.g. common weldable carbon steel or stainless steel.

There exist methods where a valve housing of a ball valve is made of two housing parts and where the welding seam is provided as a single welding seam arranged centrally at the central housing part of the valve housing.

In this known method, a protective band is arranged inside the central part of the valve housing between the all ball and the valve housing inner surface. After finishing the welding seam, this protective band must be extracted from the valve. This is rather difficult and must be done through a connection end. The ball valve is placed in half open position and the protective band can then be extracted from the valve interior. This is rather difficult and time consuming as there is limited space available for withdrawing this protective band from the valve interior.

If e.g. plasma welding is used, the high temperatures result in that the temperature sensitive items, i.e. the ball, the valve seats etc., are prone to being damaged by the increased temperatures used in plasma welding. This method also suffers, among others, from the drawback that it is not possible to provide a welding seam that penetrates the valve housing from outside surface to inside surface. This incomplete penetration of the welding seam may cause cavities along the inside of the welding seam. Such incomplete welding seams may cause crevice corrosion in the welding seam in the interior of the valve housing. Further, in most instances, when welding using added material in the welding seam may cause molten added material to run into the valve housing and then attach (as hardened metal) to the inner surface of the valve housing and/or the ball arranged inside the central part. This may result in a useless valve.

At the same time, it is also greatly desired to perform as few welding processes as possible on a valve and to reduce man-hours and thus costs when producing the valves. This is because such welding process steps are time consuming, which of course raise the overall cost of the product. In addition, reducing the number of welding seams to a minimum will in general increase the quality level for the valve production, since the lower number of welding seams also lowers the risk occurrence of flaws or errors in each valve.

### Object of the Invention

It is the object of the present invention to provide a ball valve, a method for making the valve as well as a welding tool to enable the production of the valve which is:
to manufacturing of ball valves, and has following advantages:
▪ Minimizing the welding operations to a minimum
▪ High speed production of the valves.
▪ Automation of welding operation is possible.
▪ Homogene welding seams.
▪ No creation of surplus material during welding processes.
▪ Strong, uniform and/or high quality welding seams on valve bodies.
▪ Protection of seals, valve seats, ball etc. during welding as these are mounted in the valve housing prior to the welding process.
▪ Valve can be produced with minimum weight and reduced material costs.
▪ Video inspection possibility inside the valve housing during welding ensures 100% verification of welding seam quality during the production thereof.

### Description of the Invention

These objects are met by a method for producing a valve for regulating a fluid, the valve including a valve housing with a central part and with two connection ends, the connection ends extending away from the central part. Internally of the central part there is arranged a ball, such as a ball with at least one through-going aperture. The ball is arranged relative to one or more valve seats in the central part of the valve housing.

The method of producing the valve housing at least includes the following steps:
- providing at least a first and a second housing parts, said housing parts each comprising at least a central housing part and a connection end, and
- providing a ball,
- arranging the at least a first and a second housing parts with the central part (3a) ends towards each other and arranging the ball inside the inner space (3b) of the central part,
- welding the first and a second housing parts from outer side of the central part while rotating the first and a second housing parts about an axial rotation axis and relative to the position of a valve element and a welding laser or welding torch ,
to provide a valve housing with a single welding seam arranged at the central part of the valve housing.

Hereby is obtained a fast and effective method for making ball valves and arranging the balls inside the central part of the valve housing before assembling the valve housing.

The method uses a welding tool as described further below, which rotates the housing parts during welding thereof while maintaining the ball fixed and non-rotating.

This also enables that the valve housing can be produced with minimum weight and reduced material costs as the production produces substantially no surplus/waste material.

Thus in practice it is possible to provide a spherical central part on the valve housing, which is only slightly larger than the ball installed inside the valve housing. Thus there may be as little as 0.5-5 mm free space between the outside of the ball and the inside of the valve housing, depending on the overall size of the valve.

This also enables that the valve housing can be produced with a minimum of the welding operations, as the valve housing may be made with a single welding seam on the central part of the valve housing.

Further the method ensures homogene welding seams and strong, uniform and/or high quality welding seams on the valve bodies.

The welding seam is preferably made with laser welding which provides a low input of heat to the metal forming the valve housing. Laser welding also provides a welding seam which is uniform and of uniform high quality. In addition, laser welding does not add any significant welding seam and thus no added material, since laser welding is based on melting a small fraction of the valve housing welding ends. This further reduces the risk of damaging or destroying the ball and /or valve seats, seals or packings etc. that are pre-installed inside the valve housing's central part prior to welding together the valve housing parts. Other welding technologies may also be applicable, in particular welding process with low heat emission.

The protective gas ensures corrosion protection in the welding area as oxygen is removed during welding. Further, the protective gas may also provide protection of seals, valve seats, ball etc. during welding. By providing a protective gas inside the valve housing, this gas may also provide some cooling to the interior parts resulting protection against heat during welding of the heat sensitive parts, which were arranged inside the valve housing prior to the welding step. Thus the protective gas may also assist in protection of seals, valve seats, ball etc. during welding. The protective gas can be selected by the skilled person depending on materials used for valve housing and/or ball and/or to apply to the welding process selected.

The protective gas can be provided to the inner space of the valve housing's central part by several possible ways, such as through one or more bore/pipe connection(s) through the arm and/or through a connection end's opening.

The first and second housing parts are preferably identical in shape. This will provide a final valve housing with the single welding seam at the centre of the central part of the valve housing and a symmetrical valve housing. This reduces the number of different parts on stock when producing the valves according to the invention. The central opening in the central part for installing the valve spindle may thus be aligned with the indexer and thus may be used for inspecting the correct position etc. of the indexer of the welding tool (for description of the indexer, see further below).

The housing parts are pre-shaped into their final form prior to subjecting to the welding operation. The housing parts are preferably made from tubular item, where the central housing part and the connection ends are formed by modern production equipment directly from a tube piece by plastic deformation. The plastic deformation may e.g. comprise increasing the diameter of the first end part and thus forming and/or shaping the valve housing's central part and/or reducing the diameter of at least a part of the tubular item that forms the connection end part.

In this manner it is also possible to provide the distal ends (i.e. the ends of the connection ends that face away from the central part) of the connection ends with means for connection to another element, e.g., another pipe. The shape of the distal end may thus depend on the connection means provided on the other pipe member. The distal ends, may thus e.g. be provided with flanges, increased or reduced diameter, or without changing diameter as needed to ensure proper connection to the other pipe member by conventional means.

Plastically deformed workpieces are normally to be stress-relieving annealed in order to restore the original properties. When using the present method, the housing parts can be pre-shaped and then stress-relieving annealed prior to the welding together of the valve housing parts.

Conventional casting and machining workpieces into the desired shape of the final housing parts are also possible, although higher overall costs are expected due to the increase in different working processes for obtaining the housing parts.

The valve seat(s) can by the present method be arranged in the first and/or the second housing parts prior to the assembly of the valve housing.

As already indicated above, the ball is maintained in a fixed, non-rotating position inside the central part of the valve housing by means of a welding tool. The welding tool comprises welding tool comprises holding means to hold the ball in a position inside the central part of the valve housing. The holding means may e.g. be an arm with an indexer. The valve ball body is thus held in a fixed position on the arm by inserting the arm with the indexer through the through-going aperture in the ball body. The ball body is then held in fixed, non-rotating position on the arm by means of the indexer engaging an indexer aperture in the ball from the inside of the ball body.

Alternatively the welding tool's holding means to hold the ball in a position inside the central part of the valve housing comprises an expandable mandrel, which can hold the ball element firmly on the mandrel, when the mandrel is inserted into the through-going aperture and then expanded.

The indexer is held in fixed position below the position where the welding occurs. This enables the indexer to collect any surplus material arising from the welding procedure. Thus any melted metal from the welding process is caught in the indexer and cannot attach to the ball or the valve seats, seals etc. The indexer and its ability to collect melts from the welding process are described in further details below.

This provides a simple and effective control of the fixed position of the ball and provides the effective protection of the ball against collecting any surplus melt from the welding surface.

Preferably, a camera arranged on the arm of the welding tool is inspecting the welding seam on the interior of the valve housing's central part. This enables video inspection and the possibility to ensure verification of welding seam quality during the production thereof.

The objects of the present invention are also met by a valve for regulating a fluid, the valve including a valve housing with a central part and with two connection ends, the connection ends extending away from the central part, wherein internally of the central part there is arranged a ball, such as a ball with at least one through-going aperture, wherein the ball is arranged relative to one or more valve seats in the central part of the valve housing, wherein the valve housing is assembled by a single welding seam provided centrally at the central part of the valve housing.

As the valve is made from the method as outlined above and using the welding tool as mentioned below, the valve as such also obtains the above mentioned advantages and effects as described in relation to the method and the welding tool.

The valve is in particular a ball valve, such as a floating ball valve or a trunnion ball valve.

The ball, in particular the ball, preferably comprises an indexer aperture. The indexer aperture is able to cooperate with the indexer of the welding tool as described above in relation to the method. Reference is also made to the more detailed description of the welding tool and the indexer thereof further below.

The indexer aperture may be dispensed with if the ball holding means comprise an expandable mandrel as mentioned below. Then the spindle opening may act similar to the indexer opening and follow the welding torch's /laser's position. Further, the spindle opening in the ball may be used for sucking out any surplus melted matter as discussed above and/or below. The spindle opening may also be used for introducing or extracting protective gas/backing gas into the central part's inner space.

The indexer aperture in the ball is adapted in size, shape and/or position to engage with an indexer of a welding assisting tool.

The objects of the present invention are also met by a welding tool for holding and handling valve housing parts and a ball during welding together of the valve housing parts, said welding tool comprises holding means to hold the ball in a position inside the central part of the valve housing , and where the welding tool further comprises rotation means for rotating the valve housing parts about an axial rotation axis and relative to the position of a valve element/ball and a welding laser or welding torch.

The holding means preferably comprises an arm with a radial bore in which an indexer is mounted, and where the indexer is arranged to be slidable radially out of and/or into the radial bore by means of an indexing actuator arranged in the arm as already mentioned above and as disclosed further below.

Alternatively the welding tool's holding means comprises an expandable mandrel, which can hold the ball element firmly on the mandrel, when it is inserted into the through-going aperture and then expanded.

This enables that the ball can be held fixed while the housing parts can be rotated during the welding procedure. In addition, the automated handling of the valve housing parts during welding further enables that the welding procedure can be automated in a simple, low cost and effective manner. The automation of the welding procedure may e.g. comprise use of robots to perform mounting of valve parts in the welding tool and/or to perform the welding step.

The rotation axis of the valve housing parts and the longitudinal/axial axis of the arm are in principle coinciding.

The welding tool's arm comprises a radial bore in which the indexer is mounted. The shape of the bore corresponds to the shape of the indexer and is e.g. circular, oval, or polygonal, e.g. triangular, square, rectangular, or more sides. The shape of the bore and the indexer is not important as long as the indexer in some embodiments (discussed further below) is not able to rotate inside the bore.

The indexer is arranged to be slidable radially out of and/or into the radial bore by means of an indexing actuator arranged in the arm. Thus the indexer actuator pushes the indexer radially out of the radial bore. Thereby, the indexer engages the indexer opening in the ball and ensures that the ball is held in fixed position on the arm as already described above. The indexer may also be angled in relation to radial position, e.g. if the welding seam is arranged in non-symmetrical position on the central part of the valve housing. This may e.g. be relevant when shape of the central part of the valve housing is cylindrical (or otherwise not spherical.)

The indexer is held in a fixed position below the spot where welding occurs. The indexer is thus able to collect any melted material from the welding step in a bore extending radially inward in the indexer body (i.e. radially inwards in relation to the rotation axis). Thereby, the indexer also holds the ball in a fixed, non- rotating position during the welding procedure. The bore in the indexer body is preferably cylindrical or conical and thus provides a funnel-like member for collecting surplus melted matter.

The indexer actuator comprises a rod-like member that is moveable in axial direction of the arm. The outer end of the indexer actuator comprises a wedged surface in contact with a corresponding sliding surface on the indexer. Thus, when extended from the arm, the indexer actuator pushes the indexer radially outwards as the indexer slides up the wedged surface. When retracting the indexer actuator, the indexer slides back down the wedged surface on the indexer actuator and is withdrawn into the arm.. The shape of the indexer actuator is not important as long as the indexer actuator is able to push the indexer out of the indexer bore. Alternatively, a pneumatically, electrically or hydraulically indexer actuator, e.g. a piston or cylinder may be used.

The welding tool further comprises rotation means for rotating the valve housing parts about an axial rotation axis and about the arm of the welding tool. This enables rotation of the housing parts during the welding procedure, while the ball is held in fixed, non-rotation position on the arm.

The rotation means for rotating the valve housing parts about an axial rotation axis preferably comprise a turret and a bearing. The bearing is arranged to surround the arm and to support a support bushing for holding a connection end of a first valve housing part. The turret is arranged to engage with the opposite connection end of the second valve housing. The reverse order is also possible, i.e. that the turret is arranged to surround the arm while the bearing with the support bushing is arranged at the opposite end valve housing when arranged in the welding tool.

The turret enables rotation of the valve housing parts during welding by rotating the first housing part, and the bearing supports the co-rotation of the second housing part since the two housing parts are clamped between the bearing with the support bushing and the turret.

The welding laser or welding torch is held in fixed position, while the valve housing rotates during welding of the welding seam surrounding the central part of the valve's housing.

The reverse is equally possible, as the welding laser or welding torch may be rotated around the stationary valve housing during the welding procedure while holding the indexer under the welding area all the time. In this situation, the ball is also rotated together with the welding torch or welding laser. In this situation, the protective gas is preferably also circulated inside the valve housing by withdrawing the protective gas through the bores in the indexer and the arm, e.g. by suction as also outlined below. This enables that the indexer is able to collect any melted surplus matter as the melted matter is sucked into the indexer bore. Thus the indexer is also able to collect melted matter from the welding step even though the indexer's opening is angled downwards (during its rotation).

When welding is finished, the valve housing will be aligned with the ball so as to align the opening in the valve housing for mounting of the spindle stub and a spindle with the spindle mounting opening in the ball for mounting of the spindle.

The spindle stub with the spindle arranged herein can then be arranged in the opening in the valve housing. After mounting the spindle stub and spindle, the spindle stub may be laser welded to the housing. This can be done by holding the laser welding torch in fixed position and rotate the laser welding tool about a the spindle stub's axis to provide a laser welded seam at the transit between the valve housing and the spindle stub.

When the indexer is deactivated (i.e. withdrawn into the radial bore in the arm of the welding tool) it is noted that the ball will rotate together with the housing as the valve seats holds the ball in position in relation to the valve housing.

As already mentioned above, the welding tool comprises one or more gas ducts for introduction and/or withdrawal of a protective gas into the valve housing inner space.

The protective gas can be provided to the inner space of the valve housing's central part by several possible ways, such as through one or more bore/pipe connection(s) through the arm and/or through a connection end's opening.

In a preferred variant, the protective gas is applied out through the indexer as this ensures that protective gas is supplied very close to the welding area. Alternatively, the protective gas may be withdrawn through the bores in the indexer and the arm, e.g. by suction. This is possible if the indexer further comprises a connecting bore for connecting at least one gas duct in the arm with the indexer's radial bore at least when the indexer is in the expanded position.

The welding tool may be provided with a camera mounted on the arm. The camera is preferably directed in the opposite direction of the indexer. The camera is e.g. directed radially outwards and directed towards an opening in the ball for the valve spindle (which is to be fastened after the valve housing parts are welded together). In this way, the camera can be connected to a computer with relevant software and is able to inspect the welding seam on the interior of the valve housing during the welding procedure. This improves the quality of the valves as the welding procedure can be adapted in case the camera inspection detects flaws or errors in the welding seam. The result will be a lower number of "off-spec" valves, and thus further reduced overall production costs.

Although the invention is primarily described herein in relation to ball valves below, it is clear that the present invention may also be applicable with other types of valves where the ball is arranged inside the valve housing, in particular in a section of the valve housing with increased cross sectional size in relation to the connection ends.

### Description of the Drawing

The invention will now be explained below with reference to the drawing, where:
- Fig. 1: shows a prior art valve assembled with two welding seams in a cross sectional view
- Fig. 2: shows a valve with a valve housing according to the invention
- Fig. 3: shows the valve in fig 1 in a cross sectional view
- Fig. 4: shows a ball of a ball valve according to the present invention
- Fig. 5: shows a pre-shaped and pre-assembled valve housing part for making a valve according to the present invention
- Fig. 6a-c: show steps in the process of welding together of the valve housing parts shown in fig. 5

In the explanation of the figures, identical or corresponding elements will be provided with the same designations in different figures. Therefore, no explanation of all details will be given in connection with each single figure.

### Detailed Description of the Invention

Fig. 1 shows a traditional ball valve in a cross sectional view. In the present fig. 1 ball valve is a floating ball valve. The valve has a valve housing 2 with connection ends 4 attached to the central part 3. Traditional valve housings are welded together by a welding seam at the transit area 2c between the central part 3 and the each of the connection ends 3a,3b respectively.

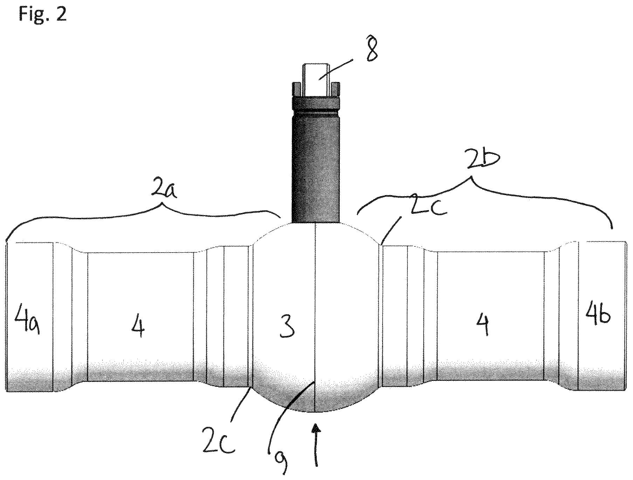

Fig. 2 shows a valve 1 according to the present invention. The valve also has a valve housing 2 with connection ends 4 attached to the central part 3.

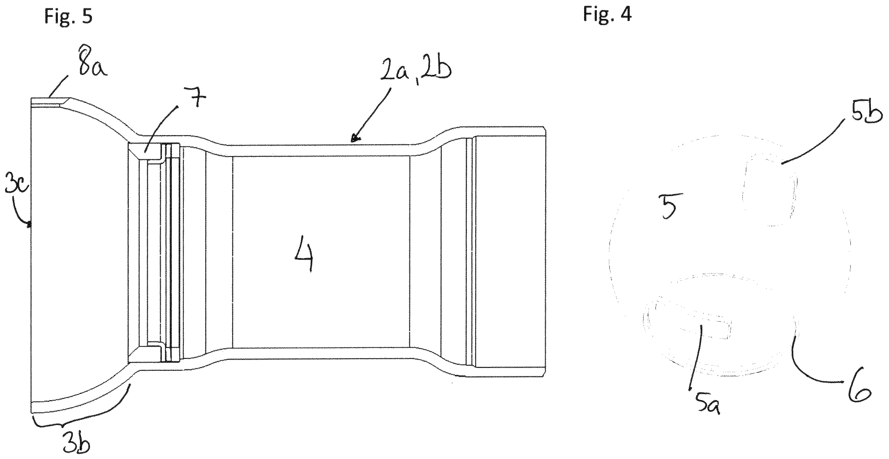

The valve in fig. 2 is made with a single welding seam 9 that surrounds the central part 3. In fig. 2 a valve spindle is arranged in a spindle stub 8. Thus the valve housing in fig. 1 is made from two pre-formed housing parts 3a,3b as shown in fig. 5. The housing half parts 3a, 3b are pre-formed as described further above. Each housing part has valve seat 7 installed prior to assembly of the valve housing by welding together the half parts 2a,2b at the welding end 3c (see also fig. 5).

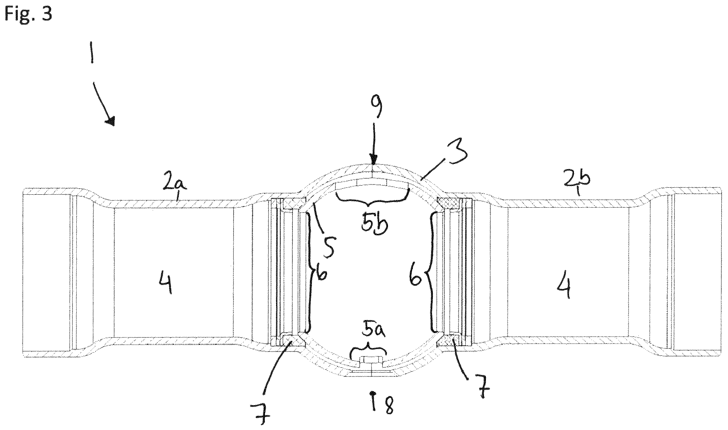

Fig. 3 shows a cross section of the valve in fig. 2 (valve spindle and spindle stub 8 are not disclosed in fig.2). The ball 5 shown in fig. 3 is a ball 5 with at least a through-going passage 6 that allows a fluid flow through the ball body 5. The ball is also shown in fig. 4. The ball body 5 comprises through-going aperture 6 and a spindle attachment opening 5a. An indexer aperture 5b is also arranged in the ball 5. The function of the indexer opening 5b is described further below. In fig. 4, the indexer opening 5b is shown as oval although other shapes are possible as also discussed above, as long as the indexer opening 5b allows the indexer 12 to pass into the indexer opening 5b and fix the ball body 5 firmly in a non-rotating manner as also discussed further below.

As shown in fig. 3 the ball body 5 is positioned inside the central part 3 of the valve housing 2 and is held in position between the valve seats 7. The welding seam 9 is arranged centrally on the valve housing's central part 3.

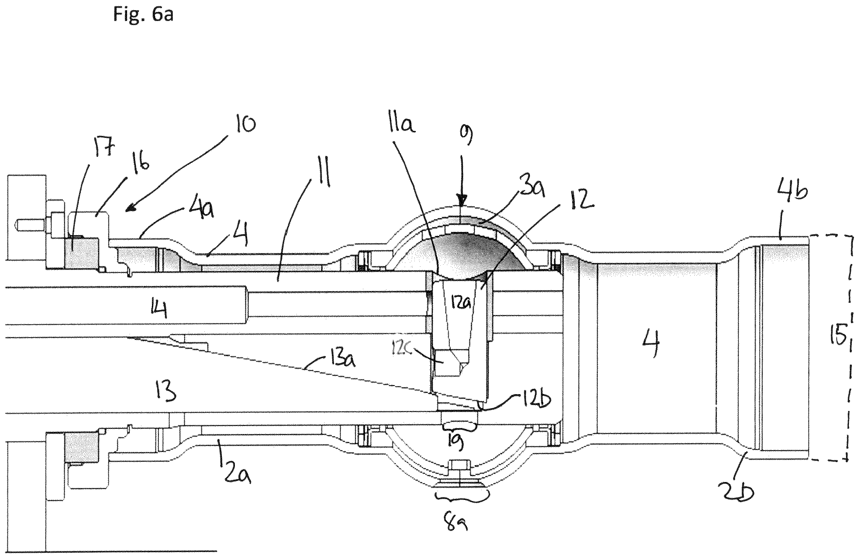

Next the welding tool and the method of producing the valve is described with reference to figs. 6a-6c.

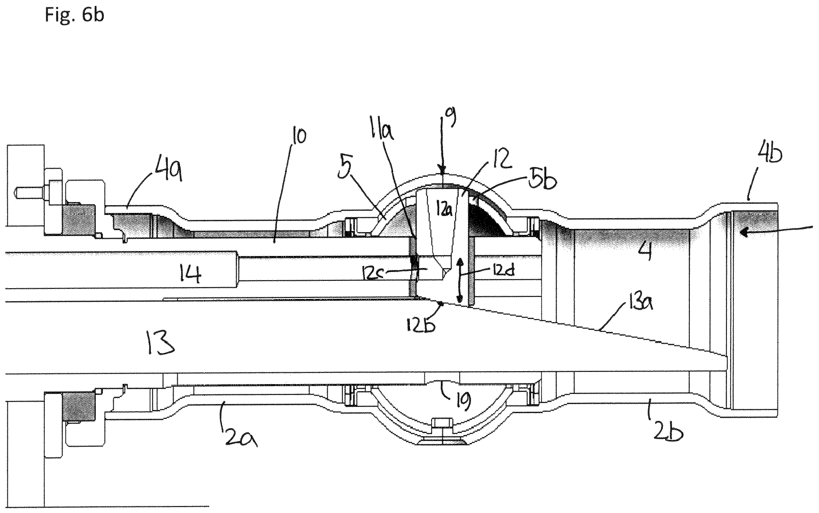

The welding tool 10 is for holding and handling valve housing parts 2a,2b and a ball 5 during welding. The welding tool comprises an arm or a shaft 11 with a radial bore 11a in which an indexer 12 is mounted. The indexer 12 is arranged to be slidable radially out of and/or into the radial bore 11a by means of an indexer actuator 13 arranged in the arm 11 as illustrated with arrow 12d in fig. 6b.

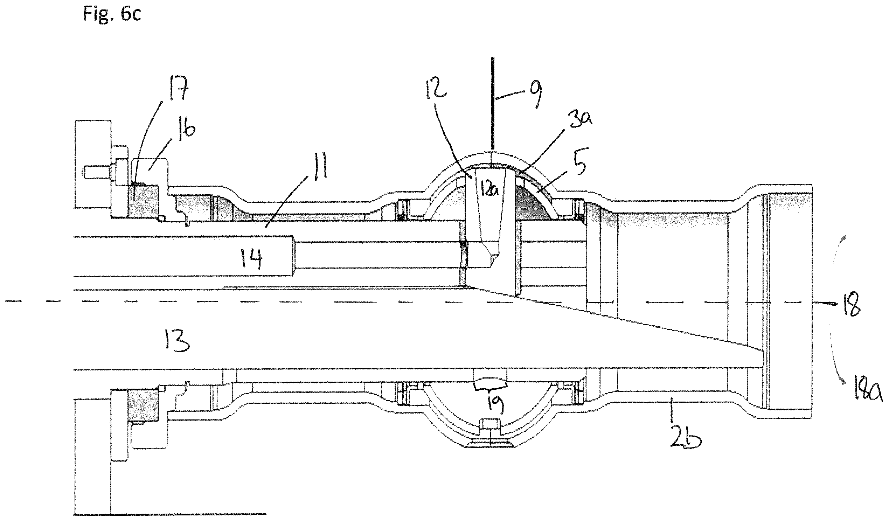

The welding tool further comprises rotation means 15, 17 for rotating the valve housing parts about the rotation axis 18 that is coinciding with the arm's11 axial axis, see arrow 18a on fig. 6c.

Thereby, the ball 5 can be held fixed while the housing parts 2a,2b can be rotated during the welding procedure. This further enables that the welding seam is uniform and of uniform high quality. In addition, the automated handling of the valve housing parts during welding further enables that the welding procedure can be automated in a simple, low cost and effective manner. The automation of the welding procedure may e.g. comprise use of robots to perform mounting of valve parts in the welding tool and/or to perform the welding step.

The rotation axis of the valve housing parts and the longitudinal/axial axis of the arm are in principle coinciding and is shown in fig. 6a and 6c as line 18.

The indexer 12 is arranged to be slidable radially out of and/or into the radial bore 11a by means of an indexing actuator 13 arranged in the arm 11. As discussed above, the shape of the indexer actuator is not important and may e.g. alternatively comprise a pneumatically, electrically or hydraulically driven indexer actuator, e.g. a piston or cylinder may be used. Thus, the indexer actuator shown in figs. 6a-6c is merely an example of a possible construction of the indexer actuator.

In figs. 6a-6c, the indexer actuator is movable in axial direction 18 as illustrated with arrow 13b in fig. 6b. Thereby the wedged surface 13a on the indexer actuator 13 pushes the indexer radially out of the radial bore 11a in the arm 11 by means of its contact with a corresponding sliding surface 12b on the inner end of the indexer 12. Thus, when extended from the arm 11, the indexer actuator 13 pushes the indexer 12 radially outwards (see arrow 12d in fig. 6b) as the indexer 12 slides up the wedged surface 13a on the indexer 13. When retracting the indexer actuator 13, the indexer 12 slides back down the wedged surface 13 on the indexer actuator 13 and is withdrawn into the radial bore 11a in the arm 11.

The indexer 12 is held in a fixed position below the spot 9 where welding occurs. The indexer 12 is thus able to collect any melted material from the welding step in a bore 12a extending radially inward in the indexer body 12 (i.e. radially inwards in relation to the rotation axis). Thereby, the indexer 12 also holds the ball in a fixed, non- rotating position during the welding procedure. The bore 12a in the indexer body is preferably cylindrical or conical as shown in figs 6a-6c and thus provides a funnel-like member for collecting surplus melted matter. It is noted that the indexer 12 can be taken out of the radial bore 11a and replaced with a new indexer (or a cleaned indexer), e.g. if the indexer bore 12a is blocked by melted matter. It is noted that the funnel/conical shape of the bore 12a is preferred as the bore 12a is then easier cleaned for any melted metal caught herein.

The welding tool 10 further comprises rotation means 15,17 for rotating the valve housing parts 2a,2b about an axial rotation axis 18 and about the arm of the welding tool. This enables rotation of the housing parts 2a,2b during the welding procedure, while the ball 5 is held in fixed, non-rotation position on the arm.

The rotation means for rotating the valve housing parts about an axial rotation axis preferably comprises a turret 15 and a bearing 17 in figs. 6a-6c, the bearing 17 is arranged to surround the arm 11 and to support a support bushing 16 for holding a connection end 4a of a first valve housing part 2a. The turret 15 is arranged to engage with the opposite connection end 4b of the second valve housing part 2b. The reverse order is also possible, i.e. that the turret 15 is arranged to surround the arm 11 while the bearing 17 with the support bushing 16 is arranged at the opposite end valve housing 1 when arranged in the welding tool 10.

The turret 15 enables rotation of the valve housing parts 2a,2b during welding by rotating the first housing part 2a, and the bearing 16 supports the co-rotation of the second housing part 2b since the two housing parts are clamped between the bearing 17 with the support bushing 16 and the turret.

The welding laser or welding torch is held in fixed position at position 9, while the valve housing 2 rotates during welding of the welding seam 9 surrounding the central part 3 of the valve's housing 2. The reverse is equally possible, as the welding laser or welding torch may be rotated around the stationary valve housing 2 during the welding procedure while holding the indexer 12 under the welding area (corresponding to the welding seam 9) at all the time. In this situation, the protective gas is preferably circulated inside the valve housing 3b by withdrawing the protective gas through the bores 12a, 12c in the indexer 12 and at least one bore in the arm, e.g. by suction as also outlined below. This enables that the indexer 12 is able to collect any melted surplus matter as the melted matter is sucked into the indexer bore 12a. Thus the indexer is also able to collect melted matter during welding even though the indexer's opening /bore 12a is angled downwards (during its rotation).

When welding is finished, the valve housing 2 will be aligned with the ball 5 so as to align the opening 8a in the valve housing for mounting of the spindle stub and a spindle with the spindle mounting opening 5a in the ball 5.

The spindle stub with the spindle arranged herein can then be arranged in the opening in the valve housing. After mounting the spindle stub and spindle, the spindle stub may be laser welded to the housing. This can be done by holding the laser welding torch in fixed position and rotate the laser welding tool about a the spindle stub's axis to provide a laser welded seam at the transit between the valve housing and the spindle stub.

When the indexer 12 is deactivated (i.e. withdrawn into the radial bore 11a in the arm of the welding tool, see fig. 6a) it is noted that the ball 5 will be able to rotate together with the valve housing 2 as the valve seats 7 holds the ball 5 in position in relation to the valve housing 2.

The protective gas can be provided to the inner space 3b of the valve housing's central part 3 by several possible ways, such as through one or more bore/pipe connection(s) 14 through the arm and/or through a connection end's opening. The protective gas thus also serves as a backing gas during the welding step.

In a preferred variant, the protective gas is applied out through the indexer 12 as this ensures that protective gas is supplied very close to the welding area 9. Alternatively, the protective gas may be withdrawn through the bores in the indexer 12a, 12b and the arm 14 . This is possible if the indexer 12 further comprises a connecting bore 12c for connecting at least one gas duct 14 in the arm with the indexer's radial bore 12a at least when the indexer is in the expanded position as shown in figs. 6b-6c.

The welding tool may be provided with a camera 19, which is preferably mounted on the arm. The camera 19 is preferably directed in the opposite direction of the indexer. The camera is e.g. directed radially outwards and directed towards the spindle opening 5a in the ball 5 for attachment of the valve spindle 8. In this way, the camera can be connected to a computer with relevant software and is able to inspect the welding seam on the interior of the valve housing during the welding procedure. This improves the quality of the valves as the welding procedure can be adapted in case the camera inspection detects flaws or errors in the welding seam. The result will be a lower number of "off-spec" valves, and thus further reduced overall production costs.

In the present application, the term "approximately" is used which includes the tolerances seen as normal by the skilled in the art. For example, the term "approximately circular" is used, and "approximately" is here to be understood in the way that the skilled in the art visually perceives the shape as circular or substantially circular, besides including the tolerances seen as normal by the skilled in the art by possible measuring and determining the shape of the workpiece.

The invention is not limited to the above described embodiments and not to the embodiments shown in the drawings either, and the invention as specified and defined in the claims may be supplemented and modified in any way as suggested by a person skilled in the art.

### List of reference numbers:

- 1.: valve
- 2.: valve housing
a. first (half) housing part
b. second (half) housing part
c. transit area between central part and connection end
- 3.: central part
a. (half) part of central housing
b. inner space of valve housing's central part
c. welding end
- 4.: connection ends
a. first connection end
b. second connection end
- 5.: ball, ball body
a. spindle attachment opening
b. indexer aperture
- 6.: through-going opening in ball
- 7.: valve seat
- 8.: valve spindle
a. valve spindle opening in valve housing
- 9.: welding seam on valve housing
- 10.: welding tool
- 11.: arm/shaft of welding tool
a. radial bore for indexer
- 12.: indexer
a. bore (conical)
b. sliding surface
c. connecting bore
d. arrow indicating radial in/out movement of indexer
- 13.: indexer actuator
a. sliding surface, wedged surface
b. arrow indicating axial in/out movement of indexer actuator
- 14.: duct or bore in arm/shaft
- 15.: turret
- 16.: bushing/holder for valve housing part
- 17.: bearing
- 18.: rotation axis
- 19.: camera position

## Claims

1. A method for producing a ball valve for regulating a fluid, the valve including a valve housing with a central part and with two connection ends, the connection ends extending away from the central part, wherein internally of the central part there is arranged a valve element, such as a ball with at least one through-going aperture, wherein the valve element is arranged relative to one or more valve seats in the central part of the valve housing, and wherein the method of producing the valve housing at least includes the following steps:
- providing at least a first and a second housing parts, said housing parts each comprising at least a central housing part and a connection end, and
- providing a ball,
- arranging the at least a first and a second housing parts with the central part ends towards each other and arranging the ball inside the inner space of the central part,
- welding the first and a second housing parts from outer side of the central part while rotating the first and a second housing parts about an axial rotation axis and relative to the position of a valve element and a welding laser or welding torch,
to provide a valve housing with a single welding seam arranged at the central part of the valve housing.

2. A method according to claim 1, **characterized in that** the welding seam is made with laser welding.

3. A method according to claim 1 or 2, **characterized in that** the first and second housing parts are identical in shape.

4. A method according to any of the claims 1 to 3, **characterized in that** a valve seat is arranged in the first and/or the second housing parts prior to the assembly of the valve housing.

5. A method according to any of the claims 1 to 4, **characterized in that** the ball is maintained in a -rotating manner inside and relative to the central part, by means of a welding tool having an expandable mandrel, which can hold the ball element firmly on the mandrel, when inserted into the through-going aperture and then expanded, or an arm with an indexer, and where the ball is held in a fixed position on the arm by the indexer engaging an indexer aperture in the ball.

6. A method according to any of the claims 1 to 5, **characterized in that** a protective gas is provided to the inner space of the valve housing's central part through a connection through the arm and/or through a connection end's opening.

7. A method according to any of the claims 1 to 6, **characterized in** inspecting the welding seam on the interior of the valve housing's central part by a camera arranged on the arm.

8. A valve for regulating a fluid, the valve including a valve housing with a central part and with two connection ends, the connection ends extending away from the central part, wherein internally of the central part there is arranged a ball, such as a ball with at least one through-going aperture, wherein the ball is arranged relative to one or more valve seats in the central part of the valve housing, wherein the valve housing is assembled by a single welding seam provided centrally at the central part of the valve housing.

9. A valve according to claim 8, **characterized in that** the valve is a ball valve, in particular a floating ball valve or a trunnion ball valve.

10. A valve according to claim 8 or 9, **characterized in that** the ball, in particular the ball, comprises an indexer aperture (5b), and where said indexer aperture in the ball is preferably adapted in size, shape and/or position to engage with an indexer of a welding assisting tool.

11. A welding tool for holding and handling valve housing parts and a ball during welding together of the valve housing parts, said welding tool comprises holding means to hold the ball in a position inside the central part of the valve housing and where the welding tool further comprises rotation means for rotating the valve housing parts about an axial rotation axis relative to the position of the ball and a welding laser or welding torch.

12. A welding tool according to claim 11, **characterized in that** the valve element holding means comprises
- an expandable mandrel which can hold the ball element firmly on the mandrel, when inserted into the through-going aperture and then expanded or
- an arm with a radial bore in which an indexer is mounted, and where the indexer is arranged to be slidable radially out of and/or into the radial bore by means of an indexing actuator arranged in the arm.

13. A welding tool according to claim 12, **characterized in that** the tool comprises one or more gas ducts for introduction and/or withdrawal of a protective gas into the valve housing inner space.

14. A welding tool according to any claim 12 or 13, **characterized in that** the indexer further comprises a connecting bore for connecting at least one gas duct with the indexer's radial bore at least when the indexer is in the expanded position.

15. A welding tool according to any of the claims 12-14, **characterized in that** the rotation means for rotating the valve housing parts about an axial rotation axis comprises a turret and a bearing where the bearing is arranged to surround the arm and where the turret is arranged to engage with the opposite end of the valve housing or vice versa so as to enable rotation of the valve housing parts.
